# EUROPEAN PATENT APPLICATION

(11) **EP 3 502 441 A1**
(43) Date of publication of application: **26.06.2019**
(21) Application number: 18213214.2
(22) Date of filing: 17.12.2018
(51) Int. Cl.: F02C 7/262, F02C 9/26, F02C 9/28

(54) **LIGHT-OFF DETECTION SYSTEM FOR GAS TURBINE ENGINES**

(30) Priority: 15.12.2017 US 201715843074
(71) Applicant: United Technologies Corporation, Farmington, CT 06032 (US)
(72) Inventor: PASCU, Victor, Jupitor, FL Florida 33458 (US)
(74) Representative: Dehns

(57) **Abstract**

A system for light-off detection in a gas turbine engine (20) according to an example of the present disclosure includes, among other things, a computing device that has memory and a processor. The computing device is configured to execute a data module (174) and a comparison module (176). The data module (174) is programmed to access data that corresponds to a present rotational speed of a gas turbine engine component. The comparison module is programmed to cause an indicator (188) to be generated in response to determining that an acceleration rate relating to the present rotational speed meets at least one predetermined acceleration threshold, the indicator relating to an engine light-off condition.

## Description

### BACKGROUND

This disclosure relates to engine light-off of a gas turbine engine, and more particularly to a system for detecting an engine light-off condition or event.

Gas turbine engines typically include a fan delivering air into a low pressure compressor section. The air is compressed in the low pressure compressor section, and passed into a high pressure compressor section. From the high pressure compressor section the air is introduced into a combustor section where it is mixed with fuel and ignited in a combustor. Products of this combustion pass downstream over a high pressure turbine section, and then a low pressure turbine section to extract energy for driving the fan.

An engine light-off event occurs when combustion in the combustor has commenced and the turbine section begins to provide torque without complete assistance of a starter. One technique for estimating when engine light-off has occurred includes measuring a rise in temperature of exhaust gases exiting the engine.

### SUMMARY

A system for light-off detection in a gas turbine engine according to one disclosed non-limiting embodiment includes a computing device that has memory and a processor. The computing device is configured to execute a data module and a comparison module. The data module is programmed to access data that corresponds to a present rotational speed of a gas turbine engine component. The comparison module is programmed to cause an indicator to be generated in response to determining that a rotational acceleration of the gas turbine engine component meets at least one predetermined acceleration threshold, the indicator relating to an engine light-off condition.

In an embodiment according to the previous embodiment, the comparison module is programmed to cause a flow rate of fuel between a fuel source and a combustor to change in response to the acceleration meeting the at least one predetermined acceleration threshold.

In a further embodiment of any of the foregoing embodiments, the comparison module is programmed to compare the acceleration and at least one command associated with the combustor.

In a further embodiment of any of the foregoing embodiments, the at least one command includes a fuel flow signal to a fuel valve and an ignition signal to an ignitor of the combustor.

In a further embodiment of any of the foregoing embodiments, the gas turbine engine component is a rotor shaft driven by a turbine.

In a further embodiment of any of the foregoing embodiments, the comparison module is programmed to compare two or more values of the acceleration.

In a further embodiment of any of the foregoing embodiments, the data module is programmed to access the data during a windmilling event associated with a fan section of a gas turbine engine comprising the gas turbine engine component.

In a further embodiment of any of the foregoing embodiments, the data module is programmed to access the data during at least an engine startup event prior to an engine light-off condition of a gas turbine engine comprising the gas turbine engine component.

In a further embodiment of any of the foregoing embodiments, the data module is programmed to access data corresponding to a present temperature of an exhaust stream. The comparison module is programmed to compare a change in the present temperature to at least one predetermined temperature threshold.

A gas turbine engine according to another disclosed non-limiting embodiment includes a combustor section that has a combustor in communication with a fuel assembly. The fuel assembly has a fuel valve coupling the combustor to a fuel supply. A controller in communication with the fuel assembly is programmed to receive data that corresponds to a present rotational speed of a component of the gas turbine engine, and is programmed to cause a flow rate from the fuel valve to change in response to determining that a rotational acceleration of the component meets at least one predetermined acceleration threshold.

In an embodiment according to the previous embodiment, the fuel valve is responsive to a predefined fuel schedule programmed in a fuel control.

In a further embodiment of any of the foregoing embodiments, the controller is programmed to receive the data during a windmilling event associated with a fan prior to an engine light-off condition.

In a further embodiment of any of the foregoing embodiments, the controller is programmed to access data corresponding to a present temperature of an exhaust stream communicated from a turbine section, and is programmed to compare a change in the present temperature to at least one predetermined temperature threshold.

A further embodiment of any of the foregoing embodiments include a compressor section including a first compressor driven by a first turbine, and the component is a rotor shaft interconnecting the first compressor and the first turbine.

In a further embodiment of any of the foregoing embodiments, the compressor section has a second compressor driven by a second turbine. The second turbine is downstream of the first turbine.

A method for detecting an engine light-off condition in a gas turbine engine according to another disclosed non-limiting embodiment includes accessing data that corresponds to a present rotational speed of a gas turbine engine component, and determines that an engine light-off condition has occurred in response to comparing a rotational acceleration of the component to at least one predetermined acceleration threshold.

An embodiment according to the previous embodiment includes causing an indicator to be generated in response to the acceleration meeting the at least one predetermined acceleration threshold.

A further embodiment of any of the foregoing embodiments include causing a flow rate of fuel from a fuel valve to a combustor to change in response to the acceleration meeting the at least one predetermined acceleration threshold.

In a further embodiment of any of the foregoing embodiments, the data corresponding to the rotational speed relates to a windmilling event.

In a further embodiment of any of the foregoing embodiments, the step of determining includes comparing a present temperature of an exhaust stream of a gas turbine engine comprising the gas turbine engine component to at least one predetermined temperature threshold.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a gas turbine engine, according to an embodiment.
Figure 2 illustrates an exemplary system for detecting an engine light-off condition, according to an embodiment.
Figure 3 illustrates an exemplary process for detecting an engine light-off condition, according to an embodiment.
Figure 4 illustrates an example plot of engine rotational speed, acceleration rate and exhaust gas temperature, according to an embodiment.

Like reference numbers and designations in the various drawings indicate like elements.

### DETAILED DESCRIPTION

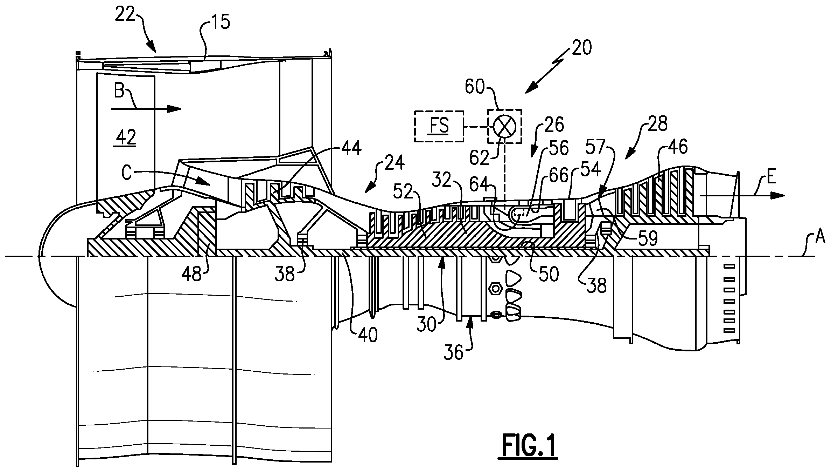

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including single-spool and three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

The engine 20 can include a fuel assembly 60 including a fuel valve 62. The fuel valve 62 fluidly couples and meters flow of fuel between a fuel source FS and the combustor 56. The combustor 56 can include an igniter 64 adjacent to a combustion chamber 66. The igniter 64 can ignite a mixture of fuel from the fuel source FS and air provided to the combustion chamber 66, with the products of combustion delivered to the turbine section 28.

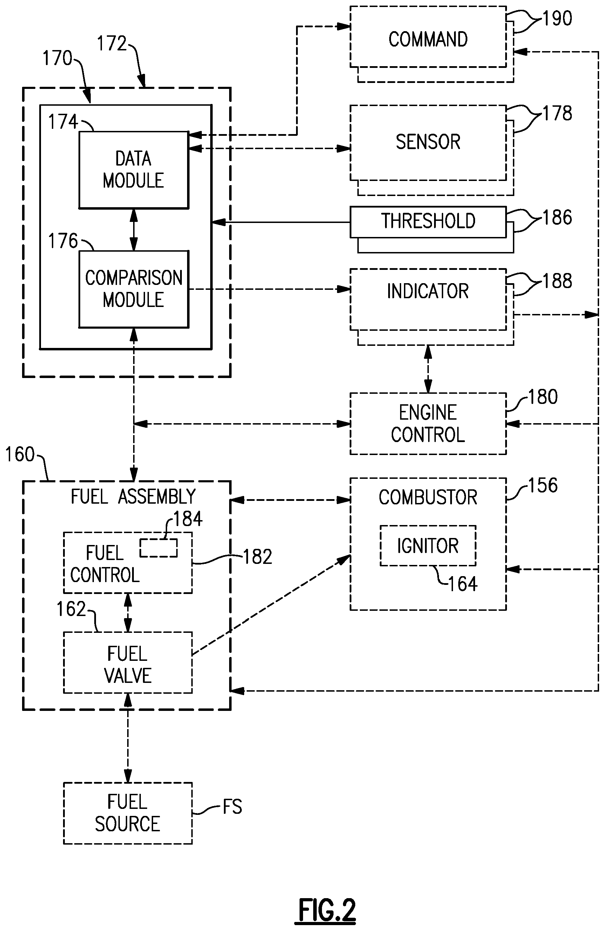

Figure 2 illustrates an exemplary system 170 for engine light-off detection, according to an embodiment. The system 170 can be used to determine an engine light-off condition or event of a gas turbine engine, such as the gas turbine engine 20 (Figure 1). Although the teachings herein primarily refer to a two spool geared gas turbine engine, other engine architectures can benefit from the teachings herein, including direct drive and geared single spool and three spool architectures. Other subsystems including auxiliary power units, and other systems such as marine and ground-based systems, can benefit from the teachings herein.

The system 170 includes a data module 174 in communication with a comparison module 176. A controller 172 can be programmed to execute the data module 174 and the comparison module 176.

The data module 174 can be coupled to one or more sensors 178. Each sensor 178 is operable to detect one or more conditions of the gas turbine engine, such as a present rotational speed of a gas turbine engine component. In some embodiments, the gas turbine engine component is a rotatable shaft, such as one of the inner and outer shafts 40, 50 of the engine 20 (Figure 1). In an embodiment, one or more of the sensors 178 is operable to detect a present temperature of gasses in the core flow path C or an exhaust stream E communicated from or otherwise exiting the turbine section 28 (Figure 1). The "present" rotational speed or temperature corresponds to a signal sensed within a timeframe that accounts for signal propagation between the various components including the system 170 and respective sensor(s) 178.

The data module 174 is programmed to access the data during one or more conditions or events associated with one or more components of the gas turbine engine, such as an engine startup event or windmilling event prior to the occurrence of engine light-off. For the purposes of this disclosure, an "engine startup event" means a condition in which the engine is moved from rest at least until an engine light-off condition occurs. In some embodiments, a starter may be used to rotate one of the inner and outer shafts 40, 50 during engine startup. Another example event can include a windmilling event associated with the fan section 22 (Figure 1). For the purposes of this disclosure, a "windmilling event" means a condition in which combustion in the engine is not occurring and incoming airflow causes the fan 42 to rotate.

The system 170 is in communication with one or more subsystems of the engine and/or aircraft associated with the engine, such as an engine control 180. In some embodiments, the system 170 is integrated with or otherwise incorporated into the engine control 180. An example engine control 180 includes a full authority digital engine control (FADEC) or an electronic engine control (EEC). In some embodiments, the engine control 180 initiates one or more subsequent start-up events or steps in response to the system 170 determining that an engine light-off event has occurred.

In the illustrated embodiment of Figure 2, the system 170 is in communication with a fuel assembly 160. The fuel assembly 160 includes a fuel control 182 coupled to a fuel valve 162. The fuel valve 162 is operable to meter flow between fuel source FS and a combustor 156. The fuel control 182 is operable to modulate the fuel valve 162. The fuel control 182 can be programmed in a number of ways to module the fuel valve 162 for light-off and the acceleration sequence of the engine. In the illustrated embodiment of Figure 2, the fuel control 182 is programmed with a predefined fuel schedule 184. The predefined fuel schedule 184 can be defined by a desired mixture of fuel and airflow during various conditions of the combustor 156, such as engine start-up, takeoff, cruise and approach conditions of the engine, with the fuel control 182 programmed to modulate the fuel valve 162 according to the predefined fuel schedule. The predefined fuel schedule may be incorporated as one or more lookup tables or equations in the fuel control 182.

The comparison module 176 is programmed to compare the present rotational speed of the rotational gas turbine engine component over a predefined time period and to determine an instantaneous change or rise in an acceleration rate corresponding or otherwise relating to the present rotational speed. The comparison module 176 is programmed to determine whether or not an instantaneous change or rise in the acceleration rate meets at least one predetermined criterion. The predetermined criterion can include one or more thresholds 186. The thresholds 186 can include one or more levels or ranges such as at least one predetermined acceleration threshold. The predetermined acceleration threshold can be a single predefined acceleration rate or a predefined range of acceleration rates. In some embodiments, the acceleration rate is an acceleration rate (Ndot) relating to the present rotational speed of a rotatable gas turbine engine component of one of the low speed and high speed spools 30, 32, such as one of the inner and outer shafts 40, 50 (Figure 1).

The comparison module 176 is programmed to declare that an engine light-off condition has occurred in response to determining that an instantaneous change or rise in the acceleration rate (Ndot) corresponding to the present rotational speed of one of the shafts 40, 50 (Figure 1) meets the at least one predetermined acceleration threshold. In an embodiment, the comparison module 176 determines whether a rise in an acceleration rate (N1dot) corresponding to a present rotational speed (N1) of inner shaft 40 meets the at least one predetermined acceleration threshold. In another embodiment, the comparison module 176 determines whether a rise in a core acceleration rate (N2dot) corresponding to the present rotational core speed (N2) of the outer shaft 50 meets the at least one predetermined acceleration threshold. In some scenarios, the present rotational speed (N2) of the outer shaft 50 is greater than the present rotational speed (N1) of the inner shaft 40, and an increase in the present rotational speed (N1) may lag an increase in the present rotational speed (N2).

A sudden change in the acceleration rate (Ndot) can occur at a moment of the engine light-off event, even if the engine is spooling up due to motoring by a starter or windmilling of the respective fan. The rotational speed information relating to the gas turbine engine component can be relatively more accurate and reliable and updated more frequently than other conditions of the engine that may be utilized to determine whether an engine light-off event has occurred, such as temperatures of the exhaust stream E (Figure 1).

The comparison module 176 can be programmed to average or otherwise compare two or more values of the instantaneous change or rise in the acceleration rate (Ndot) over a period of time, such as 10-20 milliseconds. This technique can reduce sensitivity to sudden fluctuations in the present rotational speed or other noise during engine operation that may otherwise cause a less accurate declaration of an engine light-off event.

In some embodiments, the comparison module 176 is programmed to cause one or more indicators 188 to be generated in response to determining that the at least one predetermined criterion is met. At least one indicator 188 relates an engine light-off event, including a calculated or estimated time that the respective engine light-off event occurred. The indicators 188 can be communicated to other subsystems of the engine and/or aircraft to indicate that subsequent engine startup steps or modes can be commenced.

The comparison module 176 can be programmed to cause a flow rate of fuel between the fuel source FS and the combustor 156 to change in response to the acceleration rate (Ndot) meeting the at least one predetermined criterion or acceleration threshold (e.g., increased). In some embodiments, the comparison module 176 is programmed to cause a fuel/air mixture to the combustor 156 to change in response to determining whether or not the at least one predetermined criterion is met.

The comparison module 176 can be programmed to corroborate the instantaneous change or rise the in acceleration rate (Ndot) with one or more other conditions of the engine, such as one or more commands 190 associated with the engine. For example, one of the commands 190 can be associated with the combustor 156, such as a fuel flow command or signal to the fuel valve 162 and an ignition signal to an igniter 164.

In some embodiments, the data module 174 is programmed to access data corresponding to a present temperature of gasses in the exhaust stream E (Figure 1). The comparison module 176 is programmed to confirm or otherwise determine that an engine light-off event has occurred in response to comparing a change in the present temperature of the gasses in the exhaust stream E to at least one predetermined criterion, such as at least one predetermined temperature threshold 186. An increase in the present temperature of the gasses in the exhaust stream E may lag increases in the acceleration rate (Ndot), whereas changes in acceleration rate (Ndot) can be substantially instantaneous or otherwise relatively more responsive. In other embodiments, the comparison module 176 is programmed to determine when an engine light-off event has occurred without the need for temperature probes to determine a present temperature of the gasses in the exhaust stream E, which can reduce complexity of the system 170 and overall weight and cost of the engine and can increase reliability.

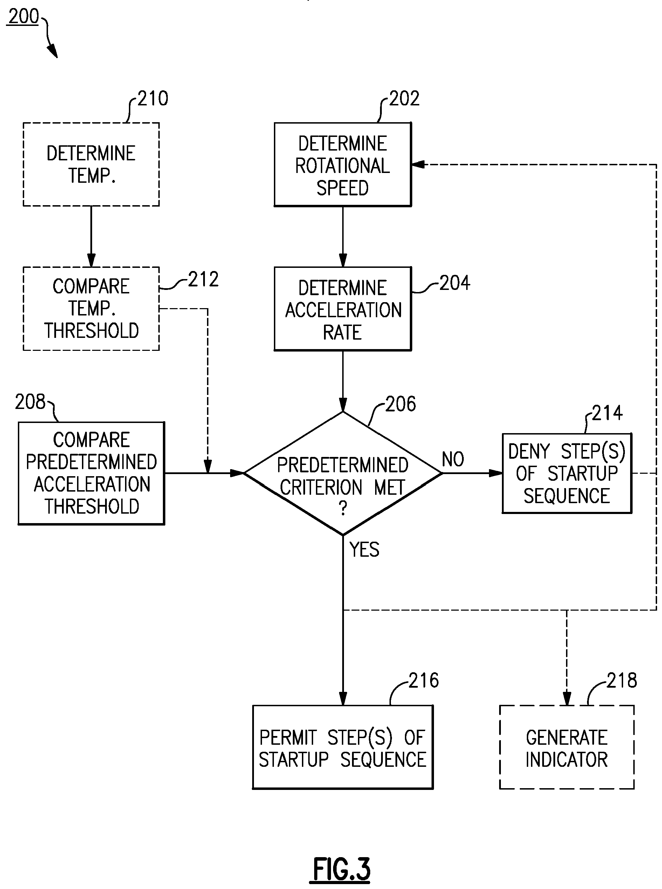

Figure 3 illustrates a process or algorithm in a flowchart 200 for detecting an engine light-off event in a gas turbine engine, according to an embodiment. Controller 172 (Figure 2) can be programmed to execute the algorithm for detecting an engine light-off event for a gas turbine engine, such as gas turbine engine 20 (Figure 1).

At step 202, the present rotational speed of a gas turbine engine component of a gas turbine engine is determined for one or more time periods. At step 204, an instantaneous change or rise in acceleration rate, such as an acceleration rate (Ndot), is determined. At step 206, a comparison is made to determine whether or not at least one predetermined criterion is met. The predetermined criterion can include any of the predetermined criterion disclosed herein. Determining whether or not at least one predetermined criterion is met at step 206 can include determining that an engine light-off event has occurred in response to comparing the acceleration rate (Ndot) to at least one predetermined acceleration threshold at step 208.

In some embodiments, a present temperature of gasses in an exhaust stream or core flow path of the gas turbine engine can be determined at step 210. The present temperature can be compared to one or more predetermined criterion, such as one or more predetermined temperature thresholds at step 212. The step 206 of determining whether or not one or more predetermined criterion is met can include determining whether the present temperature exceeds the predetermined temperature threshold.

One or more steps or modes of a startup sequence associated with the gas turbine engine comprising the rotatable gas turbine engine component can be denied at step 214 in response to determining that the predetermined criterion is not met at step 206. Step 214 can correspond to a lack of occurrence of an engine light-off event associated with the gas turbine engine.

The algorithm can include declaring the occurrence of an engine light-off event in response to the predetermined criterion being met at step 206. One or more steps of a startup sequence associated with the gas turbine engine can be initiated or otherwise permitted at step 216 in response to determining that the predetermined criterion is met at step 206. The startup sequence can occur during a windmilling event or during the initial startup of the gas turbine engine. Step 216 can correspond to the occurrence of an engine light-off event associated with the gas turbine engine. Step 216 can include causing a flow rate of fuel between a fuel source and a combustor to change according to a predefined fuel schedule.

At step 218, one or more indicators can be generated in response to the instantaneous change in the acceleration rate (Ndot) of the gas turbine engine component meeting the at least one predetermined criterion, such as the predetermined acceleration threshold.

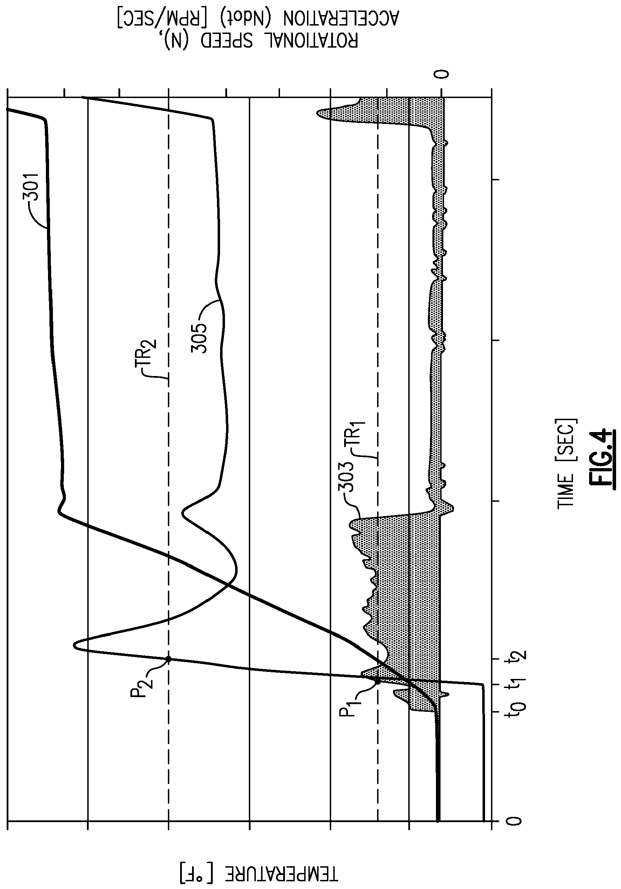

Figure 4 illustrates an example plot of rotational speed (N), acceleration (Ndot) and exhaust gas temperature during engine operation that can correspond to execution of the algorithm in flowchart 200. Curve 301 corresponds to present rotational speed (N) of a gas turbine engine component in units of rpm. Curve 303 corresponds to instantaneous changes in acceleration rate (Ndot) in units of rpm / second. Curve 305 corresponds to present temperature of gasses in an exhaust stream of the gas turbine engine in units of degrees Fahrenheit. Dashed line TR₁ corresponds to a predetermined acceleration threshold. Dashed line TR₂ corresponds to a predetermined temperature threshold.

Engine start-up is initiated at time=t₀, with values of rotational speed (N), acceleration rate (Ndot) and temperature generally rising subsequent to time=t₀. The acceleration rate (Ndot) exceeds the predetermined acceleration threshold at time= t₁, corresponding to the intersection of curve 305 and dashed line TR₁ at point P₁. An engine light-off event can be declared at point P₁. Under some scenarios, the rise in present temperature may lag the rise in the acceleration rate (Ndot). The declaration can be confirmed by the rise in present temperature at time=t₂, corresponding to the intersection of curve 305 and dashed line TR₂ at point P₂.

The controller 172 typically includes a processor, a memory and an interface. The processor may, for example only, be any type of known microprocessor having desired performance characteristics. The memory may, for example only, includes UVPROM, EEPROM, FLASH, RAM, ROM, DVD, CD, a hard drive, or other computer readable medium which may store data and the method for operation of the controller 172 of this description. The interface facilitates communication with the other systems or components of the engine 20 or aircraft, for example. In some embodiments, the controller 172 is a portion of a FADEC or an EEC, another system, or a stand-alone system.

It should be understood that relative positional terms such as "forward," "aft," "upper," "lower," "above," "below," and the like are with reference to the normal operational attitude of the vehicle and should not be considered otherwise limiting.

Although the different embodiments and examples have the specific components shown in the illustrations, embodiments of this disclosure are not limited to those particular combinations. It is possible to use some of the components or features from one of the embodiments and examples in combination with features or components from another one of the embodiments and examples.

Although particular step sequences are shown, described, and claimed, it should be understood that steps may be performed in any order, separated or combined unless otherwise indicated and will still benefit from the present disclosure.

The foregoing description is exemplary rather than defined by the limitations within. Various non-limiting embodiments are disclosed herein, however, one of ordinary skill in the art would recognize that various modifications and variations in light of the above teachings will fall within the scope of the appended claims. It is therefore to be understood that within the scope of the appended claims, the disclosure may be practiced other than as specifically described. For that reason the appended claims should be studied to determine true scope and content.

## Claims

1. A system (170) for light-off detection in a gas turbine engine (20) comprising a computing device including memory and a processor, the computing device configured to execute a data module (174) and a comparison module (176), wherein the data module (174) is programmed to access data corresponding to a present rotational speed of a gas turbine engine component, and the comparison module (176) is programmed to cause an indicator (188) to be generated in response to determining that an acceleration rate relating to the present rotational speed meets at least one predetermined acceleration threshold (TR₁), the indicator (188) relating to an engine light-off condition.

2. The system (170) as recited in claim 1, wherein the comparison module (176) is programmed to cause a flow rate of fuel between a fuel source (FS) and a combustor (156) to change in response to the acceleration rate meeting the at least one predetermined acceleration threshold (TR₁).

3. The system (170) as recited in claim 2, wherein the comparison module (176) is programmed to compare the acceleration rate and at least one command associated with the combustor (156), optionally the at least one command includes a fuel flow signal for a fuel valve (162) and an ignition signal for an ignitor (164) of the combustor (156).

4. The system (170) as recited in any preceding claim, wherein the gas turbine engine component is a rotor shaft (40, 50) driven by a turbine (46, 54), and/or the comparison module (176) is programmed to compare two or more values of the acceleration rate.

5. The system (170) as recited in any preceding claim, wherein the data module (174) is programmed to access the data during a windmilling event associated with a fan section (22) of the gas turbine engine (20) comprising the gas turbine engine component.

6. The system (170) as recited in any preceding claim, wherein the data module (176) is programmed to access the data during an engine startup event prior to an engine light-off condition of the gas turbine engine (20) comprising the gas turbine engine component.

7. The system (170) as recited in any preceding claim, wherein the data module (174) is programmed to access data corresponding to a present temperature of an exhaust stream, and the comparison module (176) is programmed to compare the present temperature to at least one predetermined temperature threshold (TR₂).

8. A gas turbine engine (20) comprising:
a combustor section (26) including a combustor (156) in communication with a fuel assembly (160), the fuel assembly (160) including a fuel valve (162) coupling the combustor (156) to a fuel supply (FS); and
a controller (172) in communication with the fuel assembly (160), the controller (172) programmed to receive data corresponding to a present rotational speed of a component of the gas turbine engine (20), and programmed to cause a flow rate from the fuel valve (162) to change in response to determining that an acceleration rate relating to the present rotational speed meets at least one predetermined acceleration threshold (TR₁).

9. The gas turbine engine (20) as recited in claim 8, wherein the fuel valve (162) is responsive to a predefined fuel schedule programmed in a fuel control (182).

10. The gas turbine engine (20) as recited in claim 8 or 9, wherein the controller (172) is programmed to receive the data during a windmilling event associated with a fan (42) prior to an engine light-off condition.

11. The gas turbine engine (20) as recited in claim 8, 9 or 10, wherein the controller (172) is programmed to access data corresponding to a present temperature of an exhaust stream communicated from a turbine section (28), and is programmed to compare the present temperature to at least one predetermined temperature threshold (TR₂).

12. The gas turbine engine (20) as recited in any of claims 8 to 11, further comprising a compressor section (24) including a first compressor (52) driven by a first turbine (54), wherein the component is a rotor shaft (50) interconnecting the first compressor (52) and the first turbine (54), optionally the compressor section (24) includes a second compressor (44) driven by a second turbine (46), and the second turbine (46) is downstream of the first turbine (54).

13. A method for detecting an engine light-off condition in a gas turbine engine (20) comprising:
accessing data corresponding to a present rotational speed of a gas turbine engine component; and
determining that an engine light-off condition has occurred in response to comparing an acceleration rate relating to the present rotational speed to at least one predetermined acceleration threshold (TR₁).

14. The method as recited in claim 13, comprising:
causing an indicator (188) to be generated in response to the acceleration rate meeting the at least one predetermined acceleration threshold (TR₁); and/or
causing a flow rate of fuel from a fuel valve (162) to a combustor (156) to change in response to the acceleration rate meeting the at least one predetermined acceleration threshold (TR₁).

15. The method as recited in claim 13 or 14, wherein:
the step of determining includes comparing a present temperature of an exhaust stream of the gas turbine engine (20) comprising the gas turbine engine component to at least one predetermined temperature threshold (TR₂); and/or
the data corresponding to the rotational speed relates to a windmilling event.
